(19) **Europäisches Patentamt**

**European Patent Office**

**Office européen des brevets**

(11) **EP 0 853 212 A1**

(12) **DEMANDE DE BREVET EUROPEEN**

| | |
|---|---|
| (43) Date de publication:<br>**15.07.1998 Bulletin 1998/29** | (51) Int Cl.⁶: **F16L 59/02** |

(21) Numéro de dépôt: **98400025.7**

(22) Date de dépôt: **08.01.1998**

(84) Etats contractants désignés:
**AT BE CH DE DK ES FI FR GB GR IE IT LI LU MC NL PT SE**
Etats d'extension désignés:
**AL LT LV MK RO SI**

(30) Priorité: **08.01.1997 FR 9700092**

(71) Demandeur: **6 D Solutions**
**69007 Lyon (FR)**

(72) Inventeur: **Croyere, Ghislain**
**75016 Paris (FR)**

(74) Mandataire: **Le Roux, Martine et al**
**Cabinet Beau de Loménie**
**158, rue de l'Université**
**75340 Paris Cédex 07 (FR)**

(54) **Produit de liaison mécanique entre un revêtement rapporté et son support, procédé d'obtention et d'utilisation**

(57)  La présente invention a pour objets :

-  un produit de liaison mécanique (1,1'), destiné à être inséré entre un revêtement rapporté (12) et son support (10) ; de façon tout à fait originale, ledit produit est capable d'assurer une liaison mécanique contrôlée ;

-  un procédé d'obtention, d'élaboration dudit produit de liaison mécanique (1,1');
-  un procédé de pose d'un revêtement rapporté (12) sur un support (10), ledit procédé de pose faisant intervenir entre ledit revêtement rapporté (12) et ledit support (10), le produit de liaison mécanique (1,1') de l'invention.

FIG.2

EP 0 853 212 A1

## Description

La présente invention a pour objets :

- un produit de liaison mécanique, destiné à être inséré entre un revêtement rapporté et son support; de façon tout à fait originale, ledit produit est capable d'assurer une liaison mécanique contrôlée ;
- un procédé d'obtention, d'élaboration dudit produit de liaison mécanique ;
- un procédé de pose d'un revêtement rapporté sur un support, ledit procédé de pose faisant intervenir entre ledit revêtement rapporté et ledit support, le produit de liaison mécanique de l'invention.

Tous ces aspects de l'invention sont développés plus avant dans le présent texte. En préambule, on se propose de préciser les termes employés et de situer plus précisément le contexte de ladite invention.

Par revêtement rapporté, nous entendons, de façon classique, tout revêtement appliqué sur une surface construite (le support, son support) dans le but d'en changer les propriétés. Cette notion englobe, tout particulièrement, les revêtements routiers, les revêtements de parkings ... les revêtements d'étanchéité de toitures ... Elle n'est nullement limitée auxdits revêtements listés ci-dessus.

Les revêtements rapportés sont conçus pour conserver, autant que faire se peut, leur continuité, leur intégralité dans les conditions de service et donc pour résister, dans lesdites conditions, à la fissuration. Lorsque ce défaut apparaît, c'est qu'il s'est formée, au sein du revêtement rapporté, une contrainte longitudinale $\sigma$ de valeur trop élevée, qui a causé la rupture. Cette contrainte longitudinale $\sigma$ est transmise audit revêtement par le fait du cisaillement $\tau$. La relation, entre $\sigma$ et $\tau$, familière à l'homme du métier, s'énonce :

$$\tau . s = \sigma . e ,$$

avec

s = surface du revêtement
et
e = épaisseur dudit revêtement.

Le cisaillement $\tau$ est généré par un déplacement entre le revêtement rapporté et son support, déplacement généralement dû à des mouvements mécaniques et/ou à des phénomènes de dilatation thermique. Toutes ces notions sont familières l'homme du métier.

Jusqu'à ce jour, pour parer aux fissurations, ruptures, des revêtements rapportés, on a surtout cherché à diminuer la valeur du cisaillement $\tau$ et donc, par voie de conséquence seulement, de façon indirecte seulement, à diminuer celle de la contrainte longitudinale $\sigma$ . On a ainsi principalement proposé, selon l'art antérieur, pour

diminuer $\tau$, trois techniques :

- selon la première, on dépose directement le revêtement rapporté sur le support, sans autre liaison que celle du poids dudit revêtement. Dans un tel cas de figure, le cisaillement $\tau$ est déterminé par le frottement. La valeur de $\tau$ est difficilement maîtrisable dans la mesure où elle varie avec les rugosités et charges du support, d'une part et du revêtement rapporté, d'autre part, ainsi qu'avec l'humidité dudit support ;
- selon la seconde, proche de la première, on désolidarise le revêtement rapporté de son support en faisant intervenir entre les deux un matériau de désolidarisation, notamment du type « papier entre deux sans fil ». Le coefficient de frottement est ainsi mieux appréhendé, en début de service tout au moins. Il est toutefois susceptible d'évoluer fortement, défavorablement dans le temps, sous l'action des paramètres indiqués ci-dessus, plus particulièrement de l'humidité ;
- selon la troisième, on solidarise, on colle ledit revêtement rapporté au support, sur toute ou seulement une partie de sa surface. A cette fin, on utilise avantageusement des colles viscoélastiques, type bitume ou autres. Ces colles, qui constituent un écran entre le revêtement et son support interviennent opportunément mais génère toutefois des valeurs de $\tau$ variables, dépendantes notamment de la température, du vieillissement du matériau, de la vitesse du mouvement dudit revêtement par rapport audit support ...

De manière générale, selon les techniques de l'art antérieur, on ne maîtrise donc pas vraiment la valeur de $\tau$.

La présente invention propose, pour une telle maîtrise, satisfaisante, des moyens - produit, procédé - nouveaux. On peut d'ores et déjà indiquer ici :

- que le produit de liaison mécanique de l'invention présente une structure telle que le glissement autorisé entre le revêtement rapporté et son support soit indépendant de la rugosité dudit support. Au moins une surface de glissement est prévue dans ladite structure entre des surfaces de rugosité connue ;
- que le mode de fixation dudit produit de l'invention permet, de fixer une valeur de $\tau$, désirée et stable, suivant les cas de figure qui se présentent. En effet, ladite valeur de $\tau$ est parfaitement maîtrisable par la maîtrise des caractéristiques du produit et de son mode de fixation.

On décrit ci-après, plus précisément, le premier objet de la présente invention, à savoir un produit de liaison mécanique, destiné à être inséré entre un revêtement rapporté et son support, produit capable d'assurer une liaison mécanique contrôlée.

Ledit produit se présente sous la forme d'une membrane, composée de plusieurs feuilles, disposées en "sandwich", constituant un sac (à la lecture de ce qui suit, l'homme du métier comprendra que ledit sac ne comporte généralement pas de fond). Plus précisément, le produit de l'invention présente une structure du type sac, qui comprend :

- une feuille supérieure (A), destinée à recevoir le revêtement rapporté; ladite feuille supérieure (A) présentant les propriétés mécaniques souhaitées pour la liaison support/revêtement rapporté ;
- une feuille inférieure (C), destinée à être positionnée sur le support, solidarisée à ladite feuille supérieure (A) sur toute la longueur de leurs bords longitudinaux et ce, sur une largeur suffisante de façon à constituer deux bandes de solidarisation ;
- au moins une, avantageusement au moins deux, feuille(s) de glissement (B), libre(s) à l'intérieur du sac ainsi constitué par lesdites feuilles supérieure (A) et inférieure (C) solidarisées.

La feuille supérieure (A), disposée sur le dessus, est destinée à recevoir le revêtement rapporté. Elle présente les propriétés mécaniques requises dans la mesure où c'est elle qui est appelée à constituer "la charpente" de la structure de liaison de l'invention, à en fixer la valeur de $\tau$.

Ladite feuille (A) peut exister selon diverses formes de réalisation et présenter notamment des caractéristiques mécaniques très différentes selon les utilisations auxquelles la structure l'incorporant est destinée. Ladite feuille (A) peut notamment consister, à résistante mécanique décroissante ( $\tau \downarrow$ ) :

- en une structure à base de fils de verre, avantageusement en une grille ou un tissu de tels fils, contrecollé ou non sur un voile de verre,
- en un nontissé de fibres de polyester,
- en une feuille plastique,
- en un papier ou carton, imprégné ou non de bitume.

Quel que soit le matériau la constituant, ladite feuille (A) peut présenter au moins l'une de ses faces, celle destinée recevoir le revêtement rapporté, enduite de bitume ou d'un produit équivalent, destiné à faciliter l'adhérence entre ladite face et ledit revêtement rapporté. Dans le cadre de la présente invention, on préconise l'intervention d'une structure du type sac dont la feuille supérieure (A) est enduite d'un bitume adhésif sur ses deux faces (voir plus loin).

La feuille inférieure (C), disposée sur le dessous, constitue, avec ladite feuille supérieure (A) le sac (la gaine) à l'intérieur duquel on trouve, libre, au moins une feuille de glissement (B). Ladite feuille inférieure (C) est solidarisée à ladite feuille supérieure (A) sur toute la longueur de leurs bords longitudinaux. Le sac (la gaine) ainsi constitué(e) permet d'une part de conserver, enfermée(s) la(les) feuille(s) de glissement (B) et d'autre part une manipulation aisée de l'ensemble.

La feuille inférieure (C) peut être de nature diverse et consister notamment :

- en un papier, carton ou voile de verre, imprégné ou non de bitume,
- en une feuille plastique,
- en un nontissé de fibres de polyester.

La feuille (C) est avantageusement d'une largeur inférieure à celle de la feuille (A) de sorte que, au niveau des bandes de solidarisation, ladite feuille (A) déborde de ladite feuille (C), laissant libre de chaque côté une bande de feuille (A) avantageusement utilisée pour la fixation adhésive au moment de la pose (cette variante étant préconisée avec des feuilles (A) adhérentes, notamment enduites d'un bitume adhésif sur leurs deux faces).

La (les) feuille(s) de glissement (B) se trouve(nt) libre(s), dans le sac constitué par lesdites feuilles (A) et (C). Ceci constitue une caractéristique essentielle du produit de l'invention. La(les)dite(s) feuille(s) de glissement (B) peu(ven)t notamment être choisie(s) parmi :

- des feuilles de papier,
- des nontissés de fibres de polyester (d'une épaisseur e, généralement telle que 10 $\mu m \leq e \leq 30\ \mu m$),
- des feuilles de polyéthylène ou de polyester.

Dans l'hypothèse où le glissement d'une feuille (C) est limité (voire empêché) par le caractère adhésif de la face inférieure de la feuille (A), il est vivement recommandé de faire intervenir au moins deux feuilles (C) ; la première, sur le dessus, protégeant la seconde (et éventuellement les autres) du caractère adhésif de la feuille (A) et assurant ainsi sa (leur) liberté de glissement.

Le produit de liaison mécanique de l'invention, constitué des trois types de feuilles, décrites ci-dessus, se présente généralement sous la forme de rouleaux. Ces rouleaux peuvent notamment présenter les cotes ci-après :

- longueur de 10 à 20 m
- largeur d'environ 1 m.

La largeur de la bande de solidarisation entre les feuilles supérieure (A) et inférieure (C) est elle généralement de 2 à 5 cm environ. Comme indiqué ci-dessus, la feuille (A) peut déborder de ladite feuille (C), notamment sur une largeur de 2 à 10 cm, généralement d'environ 5 cm.

Le produit de liaison de l'invention est généralement obtenu de la manière suivante :

- on superpose des feuilles inférieure (C), de glissement (B) et supérieure (A), destinées à le constituer ; la(les) feuille(s) de glissement (B) étant d'un format, d'une largeur notamment, plus petit que celui desdites feuilles inférieure(C) et supérieure (A) ;

- on solidarise sur toute la longueur de leurs bords longitudinaux lesdites feuilles inférieure (C) et supérieure (A) de façon à constituer un sac dans lequel la(les)dite(s) feuille(s) de glissement (B) reste (nt) libre(s).

Ce procédé de préparation du produit de liaison selon l'invention constitue le second objet de ladite invention. L'assemblage des feuilles est par exemple, mis en oeuvre de la façon suivante : la feuille supérieure (A) est collée à la feuille inférieure (C) de manière à former un sac, dans lequel la(les) feuille(s) (B) de glissement est(sont) maintenue(s) sans autre fixation. La ligne de collage feuille (A)/ feuille (C) (généralement de 2 à 5 cm de large) est avantageusement disposée de manière à laisser dépasser, sur les deux bords, la feuille (A) sur une largeur de quelques centimètres (2 à 10, par exemple). L'aspect de la feuille assemblée présente, selon cette variante avantageuse de l'invention, sur chaque bordure une largeur de quelques centimètres de la feuille (A) seule.

On se propose maintenant de décrire le dernier objet de la présente invention à savoir un procédé original de pose d'un revêtement rapporté sur un support ; ledit procédé faisant intervenir, entre ledit support et ledit revêtement rapporté, le produit de liaison mécanique de l'invention. Ledit dernier objet de la présente invention concerne donc l'utilisation de son premier objet.

Ledit procédé de pose de l'invention comprend :

- la fixation, sur au moins une partie de la surface du support, du produit de liaison mécanique de l'invention ;
- la pose du revêtement rapporté sur ladite surface du support au moins en partie revêtue dudit produit de liaison.

Le résultat, quant à la liaison libre : revêtement rapporté/support, est obtenu, dans les parties où intervient le produit de l'invention, grâce à la structure originale de celui-ci : structure du type sac à l'intérieur duquel glisse librement au moins une feuille (B).

La fixation sur le support du produit de liaison de l'invention peut être mise en oeuvre selon deux principales variantes, explicitées ci-après :

• Selon la première desdites variantes principales, on recouvre (quasi) intégralement ledit support avec ledit produit de liaison mécanique. Selon cette variante, le procédé de l'invention comprend :

  - la fixation sur le support du produit de liaison mécanique de l'invention ;
  - la pose du revêtement rapporté sur ledit produit de liaison mécanique; ledit revêtement rapporté se trouvant ainsi lié librement audit support.

La fixation du produit de liaison sur la (quasi) intégralité de la surface du support peut elle-même être mise en oeuvre selon deux variantes :

- selon une monocouche quasi continue ou
- selon deux couches discontinues.

Quelle que soit la variante mise en oeuvre, on fait intervenir des moyens de fixation dudit produit de liaison audit support. Ces moyens consistent avantageusement en une couche d'adhérence dont on a préalablement enduit ledit support. Ladite couche d'adhérence peut par exemple consister en une colle ou en un bitume adhésif. Il n'est, par ailleurs, nullement exclu de fixer ponctuellement ledit produit de liaison audit support, par exemple, en faisant intervenir une colle uniquement au niveau des bords longitudinaux dudit produit de liaison.

Selon la première variante du procédé de pose ici décrit, on fait intervenir, comme indiqué ci-dessus, le produit de liaison mécanique de l'invention, selon une monocouche quasi continue. On préconise ce type d'utilisation du produit de l'invention dans des contextes de sollicitations peu importantes ( $\tau$ faible) du revêtement rapporté.

Selon la seconde variante dudit procédé, on fait intervenir ledit produit de liaison mécanique selon deux couches discontinues. Plus précisément, on pose ledit produit de liaison mécanique :

- dans un premier temps, de façon à constituer une première couche discontinue, avec des espaces intermédiaires non recouverts entre chaque élément posé;
- dans un second temps, de façon à constituer une seconde couche discontinue, qui recouvre lesdits espaces intermédiaires de ladite première couche ainsi que, partiellement, un (et avantageusement deux) élément(s) de ladite première couche sur une largeur supérieure à celle de ses bandes de solidarisation de sorte que, au niveau de ce(s) recouvrement(s) partiel(s) la feuille supérieure (A) des éléments de la première couche assure une liaison libre.

On préconise ce type d'utilisation du produit de l'invention dans des contextes de sollicitations importantes ( $\tau$ élevé) du revêtement rapporté.

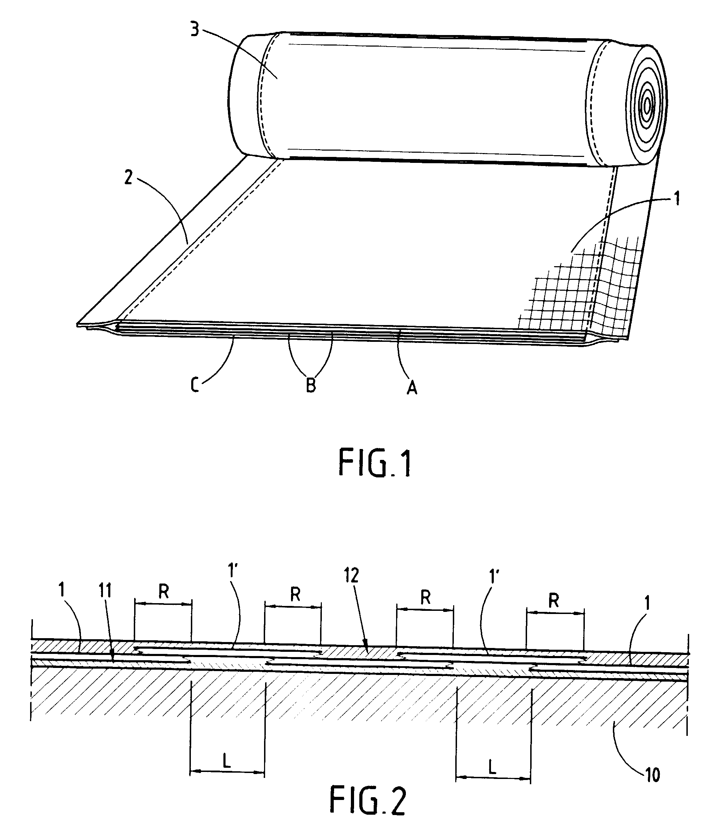

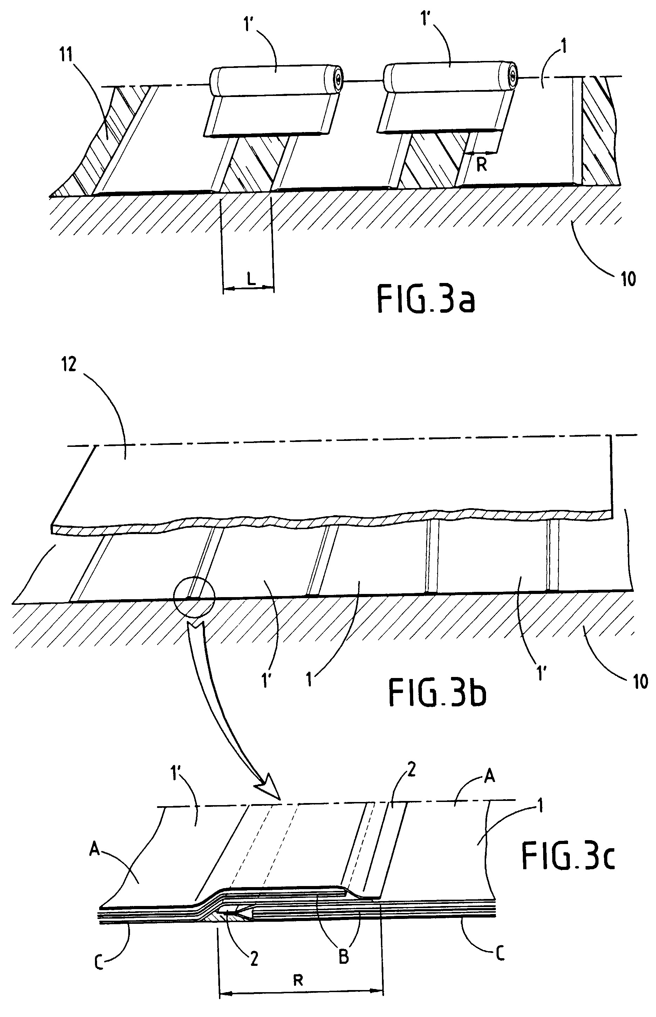

Les zones de chevauchement de la première et de la seconde couche constituent des languettes de liaison libres mécaniquement, au sein desquelles la(les) feuille (s) supérieure (A) de la première couche se trouve libre entre des feuilles de glissement (B). Ce résultat, qui constitue l'intérêt majeur de la présente invention, est clairement montré et explicité en référence aux figures annexées, notamment en référence aux figures 2 et 3c. La largeur de ces languettes, pour l'obtention de l'effet escompté, est évidemment supérieure à celle des bandes de solidarisation feuille (A) / feuille (C) voire évidemment supérieure à la somme de celle desdites bandes de solidarisation feuille (A) / feuille (C) et de celle des bandes de feuille (A) dépassant de la feuille (C), dans l'hypothèse où ladite feuille (A) est plus large que ladite feuille (C).

On a précisé ci-dessus que les éléments de la seconde couche couvre partiellement, chacun, au moins un élément de la première couche, de façon à constituer une languette de liaison libre, au niveau de ce recouvrement. Avantageusement, chacun desdits éléments de la seconde couche couvre deux éléments adjacents de la première couche et ce, selon une variante particulièrement avantageuse, de façon symétrique. On assure ainsi la liaison libre, contrôlée, entre le revêtement et son support, dans deux directions opposées avec un équilibre parfait.

• Selon la seconde desdites variantes principales, on ne recouvre avec le produit de liaison mécanique de l'invention, qu'une partie de la surface du support. On peut, dans le cadre de cette variante, faire intervenir ledit produit de l'invention en alternance avec un matériau de désolidarisation de l'art antérieur (type feuilles de « papier entre deux sans fil », par exemple), en alternance avec de la colle, voire en alternance avec rien. On propose ici des mises en oeuvre mixtes (art antérieur/invention) de pose d'un revêtement rapporté sur une surface. L'homme du métier comprend qu'il est ainsi possible de tirer avantage du produit de l'invention tout en l'économisant. Ledit homme du métier est à même d'optimiser l'alternance technique de l'invention / technique de l'art antérieur, par exemple l'alternance produit de liaison mécanique de l'invention / matériau de désolidarisation de l'art antérieur pour améliorer la résistance à la fissuration du revêtement rapporté (revêtement rapporté dans ce contexte, alternativement sur le produit de liaison mécanique de l'invention et sur un produit de désolidarisation, sur le produit de liaison mécanique de l'invention et sur une colle, ou sur le produit de liaison mécanique de l'invention et directement sur le support). En générant, de temps en temps, des liaisons libres : revêtement rapporté/support, on apporte indéniablement un plus.

Dans le cadre de cette seconde variante, on fait intervenir de la même façon que dans le cadre de la première variante, des moyens de fixation du produit de liaison de l'invention au support. Ledit produit de liaison intervient généralement, dans ce contexte selon des bandes espacées. La distance entre les bandes, avantageusement régulière, est optimisée en fonction des caractéristiques des éléments constitutifs de la structure support/produit de liaison mécanique / revêtement rapporté.

L'homme du métier aura saisi tout l'intérêt de la présente invention. On propose des moyens, pour assurer une liaison mécanique entre un revêtement rapporté et son support, qui permettent d'obtenir une contrainte adaptée à l'emploi prévu, dans le revêtement, lorsque se produit une sollicitation. En effet, la contrainte n'est pas fonction d'un frottement difficilement contrôlable (voir la première technique de l'art antérieur présentée en introduction) ni de la viscosité d'un collage (voir la troisième technique de l'art antérieur présentée en introduction) mais de liaisons mécaniques de caractéristiques connues et réglables (propriétés mécaniques de la feuille (A), caractéristiques de la pose, et notamment largeur du chevauchement lorsqu'un tel chevauchement existe).

La présente invention est illustrée, de façon nullement limitative, par les figures annexées et les exemples ci-après.

Pour ce qui concerne les figures :

- la figure 1 montre de façon schématique, une forme de réalisation du produit de liaison mécanique de l'invention ;
- la figure 2 schématise le principe de l'invention, selon lequel, par le biais du produit de liaison proposé, on peut créer une liaison libre, parfaitement contrôlée, entre un revêtement rapporté et son support ;
- les figures 3a et 3b illustrent, selon des perspectives, la variante préférée du procédé de pose selon l'invention d'un revêtement rapporté sur un support ;
- la figure 3c est un détail agrandi d'une zone de la figure 3b : zone de recouvrement de deux produits de liaison mécanique selon l'invention.

Sur la figure 1, on voit un mode de réalisation du produit de liaison mécanique de l'invention, conditionné en rouleau. La référence 1 désigne ledit rouleau. Les références A et C désignent respectivement les feuilles supérieure (incluant dans sa structure une grille de verre) et inférieure, constitutives du sac, dans lequel on trouve, libres (prises en sandwich), deux feuilles de glissement B. Pour la constitution dudit sac, lesdites feuilles A et C ont été solidarisées, par collage, sur toute la longueur de leurs deux bords longitudinaux. On désigne par la référence 2 leurs deux bandes de solidarisation latérales. La feuille A est plus large que la feuille C de sorte que des bandes de feuille A restent libres de chaque côté. Elles interviennent avantageusement pour la fixation du produit sur le support.

Sur la figure 2, on montre que, par le biais de deux couches discontinues de produits (1, 1') de l'invention, se chevauchant sur une largeur R, on peut créer une liaison libre entre un support 10 et un revêtement rapporté 12. Sur ledit support 10 à revêtir, on a préalablement coulé une couche d'adhérence 11, sur laquelle le produit de l'invention 1 a été déroulé, de façon à constituer une première couche discontinue, avec des espaces intermédiaires de largeur L. On a ensuite déroulé d'autres bandes 1' du produit de l'invention de façon à constituer une seconde couche discontinue, recouvrant lesdits espaces intermédiaires de largeur L et chevauchant la première couche suivant des bandes d'une largeur R, supérieure à la largeur des bandes de solidarisation des feuilles A et C. Au niveau de chacune de ces bandes de largeur R, la feuille supérieure A des éléments de la première couche se trouve libre entre deux couches de glissement constituées des feuilles B des première et deuxième couches. Cette liaison libre est symbolisée sur la figure 2 par des ressorts. Au niveau de chacune de ces bandes de largeur R, on a constitué des languettes de liaison libres mécaniquement entre le revêtement rapporté 12 et son support 10, revêtu de la couche d'adhérence 11. On montre, plus en détail, sur la figure 3c ci-après, une languette de ce type.

L'homme du métier comprend parfaitement qu'ainsi, en fixant d'une part les propriétés mécaniques de la feuille A et d'autre part la largeur de la liaison libre R, il maîtrise parfaitement le cisaillement $\tau$, susceptible de générer dans l'épaisseur du revêtement 12, la contrainte longitudinale $\sigma$, responsable de la fissuration.

D'une manière générale, on prévoit d'utiliser un produit de liaison mécanique de l'invention adapté (caractéristique de sa feuille supérieure (A) + pose avec une largeur R adéquate), de sorte qu'il présente un taux de cisaillement supérieur celui qu'il est appelé subir au cours de son utilisation.

En référence aux figures 3a et 3b, on explicite un procédé de pose d'un revêtement rapporté sur un support, procédé de pose qui fait intervenir le produit de liaison mécanique selon l'invention. Selon la variante représentée, comme en référence à la figure 2, le support 10 à revêtir est préalablement recouvert d'une couche d'adhérence 11. Le produit de l'invention 1 est posé de façon à constituer la première couche discontinue; on pose alors la deuxième couche 1' puis le revêtement rapporté 12. En accord avec la figure 2, précédemment commentée, les lès 1 et 1' se chevauchent de façon à générer les languettes de liaison libre de largeur R. Une telle languette est montrée en détail sur la figure 3c. A son niveau, comme déjà précisé en référence à la figure 2, la feuille supérieure A de la première couche 1 est libre entre des feuilles de glissement B.

## Exemple 1

Des produits de liaison mécanique contrôlée de l'invention sont préparés à partir :

1) d'une feuille supérieure (A) consistant en une grille de fils de verre à base de sillione 300 tex 2,5 x 2,5 fils/cm, contrecollée sur un voile de verre d'un grammage de 30 à 200 g/m². Ladite grille a été préalablement imprégnée, d'un bitume SBS adhésif, raison de 0,5 kg/m² dudit bitume. Ladite feuille (A) présente une largeur de 110 cm ;

2) de deux feuilles de polyester (feuilles de glissement : (B)) placées entre ladite feuille supérieure (A) et une feuille inférieure (C) définie ci-après. Lesdites feuilles de polyester présentent une largeur de 95 cm et une épaisseur de 10 à 50 μm environ ;

3) d'une feuille inférieure (C) consistant soit en un papier bitumé, soit en un nontissé de polyester. Ladite feuille inférieure (C) présente une largeur de 100 cm.

Les bordures longitudinales des feuilles (A) et (C) sont solidarisées par collage sur 2 cm de largeur. Les bords de la feuille (A) dépassent de la feuille (C) d'une largeur de 5 cm. Au moins une des feuilles de polyester est libre au sein du sac ainsi généré par collage. On constitue ainsi un rouleau de 110 cm de large.

Les produits de liaison ainsi élaborés présentent un $\tau$ élevé. Ils peuvent tout à fait convenir pour la pose d'un revêtement soumis à de fortes sollicitations mécaniques (par exemple, revêtement routier), pose selon l'exemple 3 ci-après.

## Exemple 2

On procède comme à l'exemple 1 en substituant à la grille de fils de verre contrecollée sur le voile de verre (feuille supérieure A) un nontissé de polyester. Les produits de liaison ainsi obtenus présentent un $\tau$ relativement bas. Ils conviennent, par exemple, pour la pose de revêtement d'étanchéité de toitures, pose selon l'exemple 4 ci-après.

## Exemple 3

Un revêtement d'asphalte sur un parking reçoit, du fait de la circulation de véhicules à sa surface, une contrainte prévisible se traduisant par des efforts conséquents de traction dans sa structure.

Pour sa pose, on utilise un produit de liaison mécanique de l'invention selon l'exemple 1 (incluant dans sa structure une feuille (A) qui présente des hautes propriétés mécaniques). Ledit produit est posé conformément aux figures 3a et 3b.

Les bandes de la première couche sont espacées de 70 cm (L = 70 cm). Cet espace laisse donc pour R, une largeur de $R = \frac{110-70}{2} = 20$ cm. Lesdites bandes sont posées sur une mince couche de bitume adhérent. Les bandes de la seconde couche sont ensuite déroulées de la même façon, pour couvrir symétriquement ledit espace. Enfin, l'asphalte du revêtement est coulé sur le tout. Conformément aux figures 2 et 3c, les bandes du produit de liaison selon l'invention sont fixées à la surface du parking (10) et au revêtement (12), avec toutefois les languettes de liaison libres de largeur R, réparties symétriquement.

Exemple 4

Un revêtement d'étanchéité de toitures ne subit aucune contrainte de surface. Pour sa mise en place, on utilise le produit de liaison mécanique de l'invention selon l'exemple 2 (incluant dans sa structure une feuille (A) qui présente de faibles propriétés mécaniques) en déroulant les bandes sans espace intermédiaire (L = 0) sur une couche de bitume. Le revêtement d'étanchéité est ensuite coulé sur la monocouche quasi continue du produit de liaison mécanique de l'invention.

**Revendications**

1. Produit de liaison mécanique, destiné à être inséré entre un revêtement rapporté (12) et son support (10), caractérisé en ce qu'il présente une structure du type sac, ladite structure comprenant :

   - une feuille supérieure (A), destinée à recevoir ledit revêtement rapporté (12); ladite feuille supérieure (A) présentant les propriétés mécaniques souhaitées pour la liaison support (10)/revêtement rapporté (12);
   - une feuille inférieure (C), destiné à être positionnée sur ledit support (10), solidarisée à ladite feuille supérieure (A) sur toute la longueur de leurs bords longitudinaux et ce, sur une largeur suffisante de façon à constituer deux bandes de solidarisation (2) ;
   - au moins une, avantageusement au moins deux, feuille(s) de glissement (B), libre(s) à l'intérieur du sac ainsi constitué par lesdites feuilles supérieure (A) et inférieure (C) solidarisées.

2. Produit de liaison mécanique selon la revendication 1, caractérisé en ce que ladite feuille supérieure (A) consiste en une structure à base de fils de verre ou en un papier ou carton, imprégné ou non de bitume ou en un nontissé de fibres de polyester ou en une feuille plastique.

3. Produit de liaison mécanique selon l'une des revendications 1 ou 2, caractérisé en ce que ladite feuille inférieure (C) consiste en un papier ou carton ou voile de verre, imprégné ou non de bitume, ou en un nontissé de fibres de polyester ou en une feuille plastique.

4. Produit de liaison mécanique selon l'une quelconque des revendications 1 à 3, caractérisé en ce que ladite feuille de glissement ( B ) consiste en une feuille de papier ou en un nontissé de fibres de polyester ou en une feuille de polyéthylène ou de polyester et en ce que, lorsque plusieurs desdites feuilles de glissement ( B ) interviennent, elles sont de nature - feuille de papier, nontissé de fibres de polyester, feuille de polyéthylène ou de polyester - identique ou différente.

5. Produit de liaison mécanique selon l'une quelconque des revendications 1 à 4, caractérisé en ce qu'il est conditionné en rouleaux (1).

6. Procédé d'obtention d'un produit de liaison mécanique selon l'une quelconque des revendications 1 à 5, caractérisé en ce qu'il comprend :

   - la superposition des feuilles inférieure (C), de glissement (B) et supérieure (A), destinées à le constituer; la(les) feuille(s) de glissement (B) étant d'un format, d'une largeur notamment, plus petit que celui desdites feuilles inférieure (C) et supérieure (A) ; et
   - la solidarisation sur toute la longueur de leurs bords longitudinaux desdites feuilles inférieure (C) et supérieure (A) de façon à constituer un sac dans lequel la(les)dite(s) feuille(s) de glissement (B) reste(nt) libre(s).

7. Procédé de pose d'un revêtement rapporté (12) sur un support (10), caractérisé en ce qu'il comprend :

   - la fixation sur au moins une partie de la surface du support (10) du produit de liaison mécanique selon l'une quelconque des revendications 1 à 5,
   - la pose du revêtement rapporté (12) sur ladite surface du support au moins en partie revêtue dudit produit de liaison mécanique.

8. Procédé selon la revendication 7, caractérisé en ce que ledit produit de liaison mécanique est posé de façon à constituer une monocouche quasi continue ou selon des bandes espacées.

9. Procédé selon la revendication 7, caractérisé en ce que ledit produit de liaison mécanique est posé :

   - dans un premier temps, de façon à constituer une première couche discontinue, avec des espaces intermédiaires non recouverts entre chaque élément posé;
   - dans un second temps, de façon à constituer une seconde couche discontinue, qui recouvre lesdits espaces intermédiaires de ladite première couche ainsi que, partiellement, un (et avantageusement deux) élément(s) (adajacents) de ladite première couche sur une largeur supérieure à celle de ses bandes de solidarisation de sorte que, au niveau de ce(s) recouvrement(s) partiel(s) la feuille supérieure (A) des éléments de la première couche assure une liaison libre.

10. Procédé selon l'une des revendications 8 ou 9, caractérisé en ce que ledit produit de liaison mécanique est conditionné en rouleaux et en ce que des lés de celui-ci sont posés, en une ou deux couches, sur une couche d'adhérence (11), dont a été préalablement enduit le support (10).

FIG.1

FIG.2

FIG.3a

FIG.3b

FIG.3c

Office européen
des brevets

**RAPPORT DE RECHERCHE EUROPEENNE**

Numéro de la demande

EP 98 40 0025

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | DE 35 30 052 A (KNEBEL HARRO)<br>* le document en entier *<br>--- | 1-3 | F16L59/02 |
| A | CH 683 543 A (KRICKL LUEFTUNGSBAU GMBH)<br>* figures 1,5 *<br>--- | 1,5 | |
| A | US 4 460 645 A (JONES JOHN C ET AL)<br>* figure 1 *<br>--- | 1 | |
| A | US 4 400 420 A (BAKKEN WENDELL J ET AL)<br>23 août 1983<br>* figure 6 *<br>----- | 1 | |

|  |  |
|---|---|
|  | **DOMAINES TECHNIQUES RECHERCHES (Int.Cl.6)**<br><br>F16L<br>F16B<br>E04B |

Le présent rapport a été établi pour toutes les revendications

| Lieu de la recherche | Date d'achèvement de la recherche | Examinateur |
|---|---|---|
| BERLIN | 4 mars 1998 | Schaeffler, C |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
 
& : membre de la même famille, document correspondant

EPO FORM 1503 03.82 (P04C02)